# EUROPEAN PATENT APPLICATION

(11) **EP 4 015 234 A1**
(43) Date of publication of application: **22.06.2022**
(21) Application number: 20461596.7
(22) Date of filing: 15.12.2020
(51) Int. Cl.: B60B 7/00, B60C 23/18

(54) **HEAT SHIELD ASSEMBLY FOR VEHICLE WHEEL**

(71) Applicant: Goodrich Corporation, Charlotte, NC 28277 (US)
(72) Inventor: ZUK, Bartlomiej, 59-220 Legnica (PL); SOKOLOWSKI, Marcin, 22-120 Wojs awice (PL)
(74) Representative: Dehns

(57) **Abstract**

A heat shield assembly complying a plate (5) of heat shield material having an attachment hole (7) therein by means of which the plate can be attached to another part using a fixation means, the assembly further comprising a stress reduction plate (8) secured to the plate (5) of heat shield material at a plurality of securing points (9) spaced from the attachment hole (7).

## Description

### TECHNICAL FIELD

The present disclosure is concerned with a heat shield assembly for a vehicle wheel such as, but not exclusively, an aircraft wheel.

### BACKGROUND

Vehicle wheels often have to rotate very quickly and may also be used in extreme environments where they are subject to very high temperatures. For example, friction generated when braking a wheel can cause the wheel material to become extremely hot which can cause damage to the wheel or otherwise adversely affect its operation. The very high braking forces on aircraft wheels, in particular, generate very high temperatures.

One way of protecting wheels against the effects of such high temperatures is to provide a heat shield on the wheel structure. The heat shield is usually a plate of more heat resistant material attached to the wheel by several bolts or rivets. The bolts or rivets are secured through holes in the heat shield and wheel structure. Heat tends to be conducted through these holes and the holes provide areas of weakness. Further, the high rotational velocity of the wheel (centrifugal load) and the tyre pressure (due to rolling of the wheel) cause large deflection of the heat shield and high stresses at the attachment holes, thus leading to cracking of the heat shield near the attachment holes.

If the heat shield is damaged in this way, its life is reduced and there is a risk of the heatshield breaking away during operation or at least of the heat shield not properly protecting the wheel structure from the high temperature environment.

There is, therefore, a need for an improved heat shield structure to overcome these problems.

### SUMMARY

According to one aspect, there is provided a heat shield assembly complying a plate of heat shield material having an attachment hole therein by means of which the plate can be attached to another part using a fixation means, the assembly further comprising a stress reduction plate secured to the plate of heat shield material at a plurality of securing points spaced from the attachment hole.

The stress reduction plate is secured to the plate of heat shield material by e.g. welding.

Ideally, the securing points are at the outer edge of the stress reduction plate.

Test have been carried out with four securing points and with nine securing points as examples.

In the examples, the plate of heat shield material has two or more attachment holes and a stress reduction plate is secured to the plate around each attachment hole.

Usually, the heat shield will comprise a plurality of plates of heat shield material, each having one or more attachment holes and one or more stress reduction plate.

Also provided is a wheel to which such a heat shield assembly is attached. In one example, the wheel is an aircraft wheel.

According to another aspect, there is provided a method of forming a heat shield for attachment to a part, the method comprising securing a stress reduction plate, at a plurality of securing points, around an attachment hole in a plate of heat shield material to be attached, via the attachment hole, to a part.

Preferred embodiments of the disclosure will now be described by way of example only and with reference to the drawings. Although reference may be made to aircraft wheels, the disclosure is not limited to aircraft wheels but also includes other wheel arrangements in vehicles, machinery or anywhere where the wheel can be subjected to potentially damaging high temperatures.

### BRIEF DESCRIPTION OF THE DRAWINGS

Figure 1 shows a perspective view of a wheel to which a heat shield is attached.
Figure 2 shows a detail of Fig. 1 showing bolt holes to which a heat shield is attached in a conventional installation.
Fig. 3 shows an example of a heat shield assembly attached to a wheel in accordance with this disclosure.
Fig. 4 shows an alternative example of a heat shield assembly attached to a wheel in accordance with this disclosure.
Figs. 5A, 5B and 5C compare stress maps from a finite element analysis for a conventional design (Fig. 5A), a design such as shown in Fig. 3 (Fig. 5B) and a design such as shown in Fig. 4 (Fig. 5C).
Figs. 6A and 6B provide a closer view of the stress maps of Figs. 5B and 5B for comparison

### DETAILED DESCRIPTION

The present disclosure provides a solution to the problems mentioned above due to the areas around the heat shield attachment holes providing a weak point for structural damage.

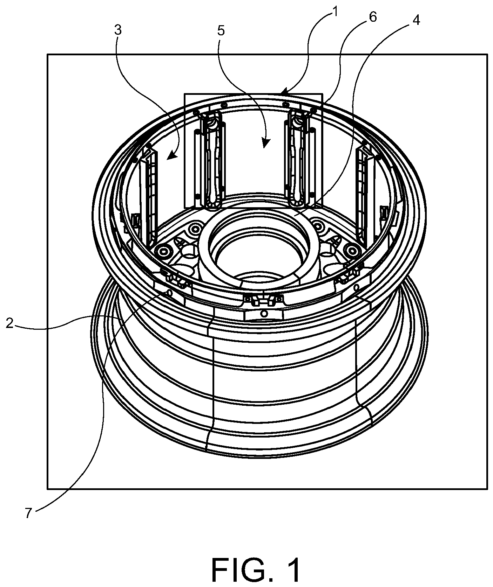

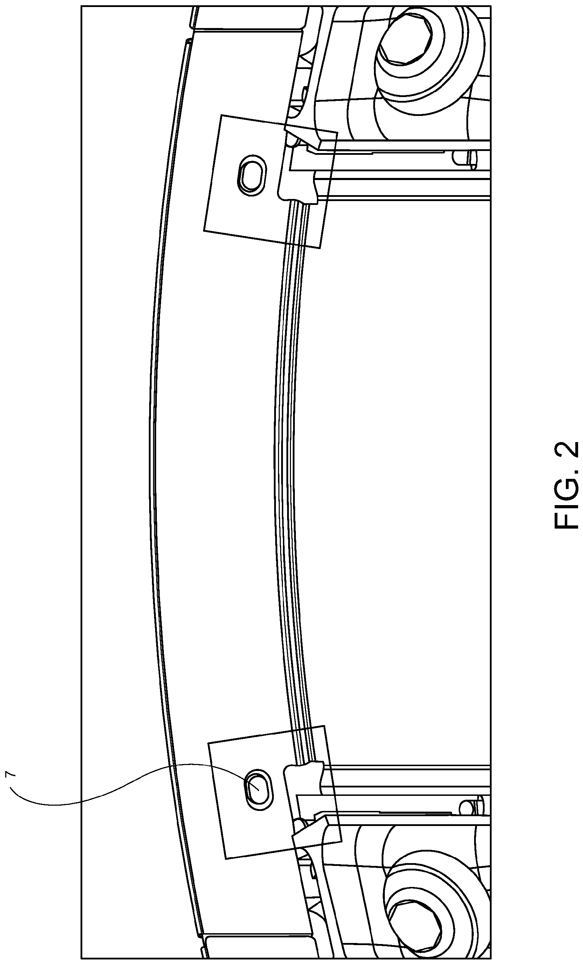

Referring first to Figs. 1 and 2, Fig. 1 shows a wheel hub 1 having an outer surface 2 around which a tyre would usually be mounted (not shown here, for simplicity) and an inner surface 3. The wheel axis 4 is defined at the centre of the wheel by means of which the wheel is mounted to a shaft of the aircraft etc. and around which the wheel rotates in use.

As discussed above, wheels are generally provided with heat shields. Fig. 1 shows heat shield segments 5 mounted around the inner surface 3 of the wheel. The heat shield segments are plates of metal and these are mounted to the wheel using fasteners such as bolts 6 which are fastened through holes 7 to secure the heat shield to the wheel. The attachment holes are shown in close-up in Fig. 2. In the example shown, the heat shield is divided into nine segments 5, and each heat shield segment is attached by screws or bolts at two holes at the top of the heat shield. This is just one example and any other number of, and positioning of segments and attachment holes can be provided.

As mentioned above, these attachment holes cause areas of weakness, where, for example, the heat shield can crack.

The present arrangement provides a heat shield stress reduction plate 8 which is provide as an additional, single layer of heat shield plate material to the heat shield in the region around the attachment hole 7. The additional plate 8 is secured to the inner surface of the heat shield segment 5 only in the region around the attachment hole 7 and so is smaller than the heat shield plate. The stress reduction plate 8 should be as small as possible to achieve the desired stress reduction around the holes whilst minimising the additional weight and cost of the assembly.

In the example shown, a stress reduction plate 8 is provided around each heat shield attachment hole 7.

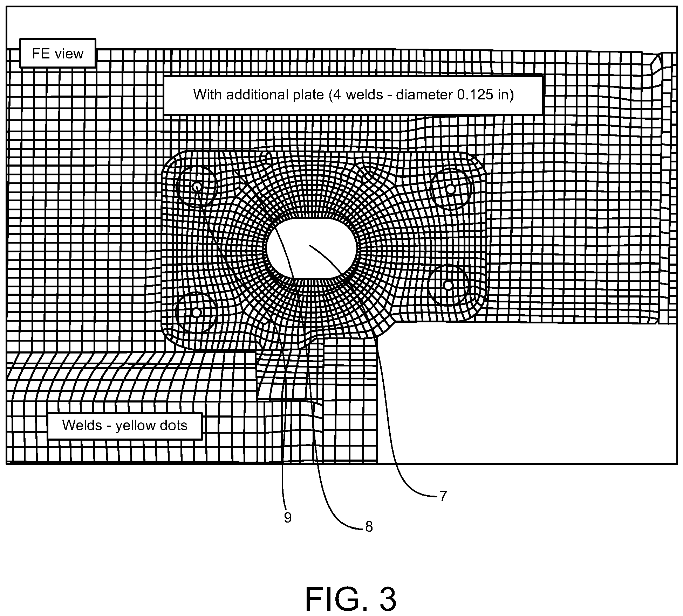

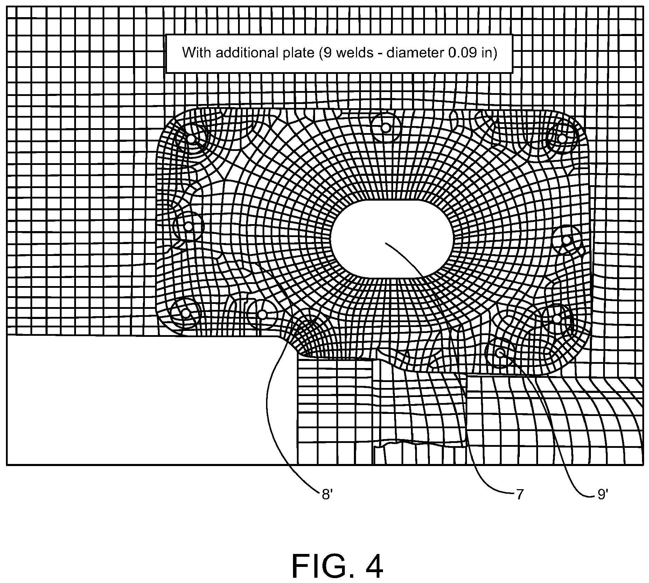

The plate 8 is secured to the heat shield by means of e.g. welding at weld points 9. Ideally, these points are spaced as far away from the attachment hole 7 on the stress reduction plate in order to better distribute the load. Ideally, the weld points are around the perimeter of the plate 8. Having the weld points too close to the holes could create excessive stress. There should be an area between the attachment hole and the weld points for better distribution of stress. Fig. 3 shows one example of a stress reduction plate 8 with four weld points 9. Fig. 4 shows an alternative arrangement where the stress reduction plate 8' is attached to the heat shield at nine weld points 9'. Where more weld points are provided, each weld point can have a smaller diameter than arrangements where there are fewer weld points, but this does not have to be the case. Any other number of weld points can be provided but the aim of the designer will usually be to ensure secure attachment and optimal stress distribution whilst minimising weight and cost.

The shape and size of the plate and the number and locations of weld points will ideally be determined based on FEA calculations.

Various materials can be used, as is known in the art, for the heat shield 5. The stress reduction plate 8 can be made of the same or a different material. Using the same material will minimise costs. Most preferably, the stress reduction plate 8 is a single layer thickness of the heat shield material mounted onto the heat shield around the attachment holes.

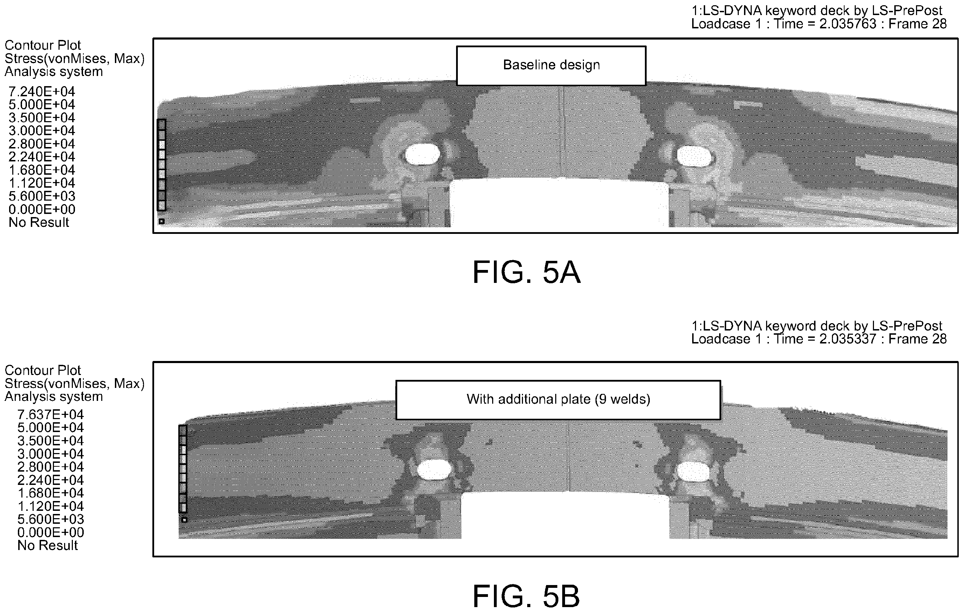

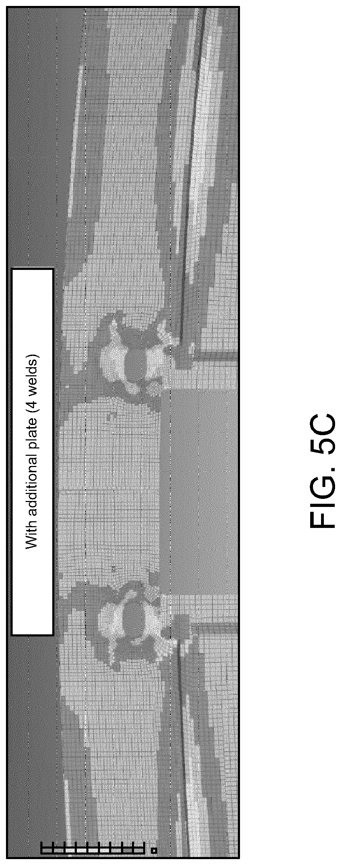

The results of the finite element analysis (FEA) of heat shield assemblies with, respectively, no additional stress reduction plate, a stress reduction plate secured at four weld points, and a stress reduction plate secured at nine weld points, are shown in Figs 5A, 5B and 5C. It can be seen from these results that where there is no stress reduction plate, in Fig. 5A, there are areas of particularly high stress around the attachment holes 7. The stress at these points reduces, and the stress is more spread out, when the stress reduction plate is attached with four weld point (Fig. 5B). The improvement is slightly less when the stress reduction plate is attached at nine weld points (Fig. 5C), but there is still a noticeable reduction of stress around the holes.

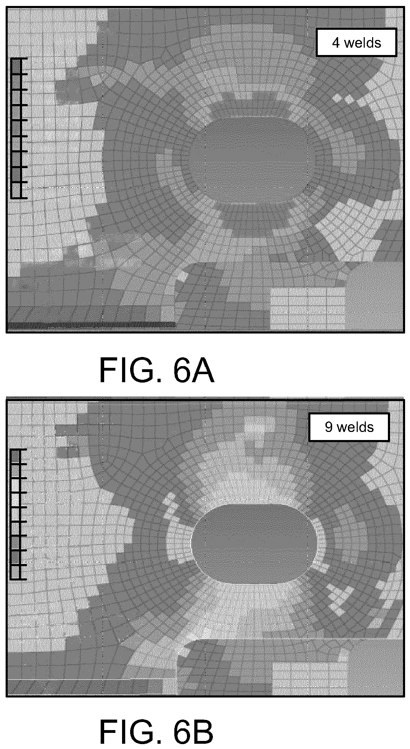

Figs. 6A and 6B show a comparison of the stress maps for the four weld point and the nine weld point embodiments.

To assemble the heat shield assembly in a simple manner, the stress reduction plate can be first attached to the heat shield plate or segment around the attachment hole 7 in the heat shield plate 5 by e.g. welding at the desired weld points. The assembly of heat shield segment and stress reduction plate is then mounted to the wheel in the same way the heat shield segment would normally be mounted to the wheel and is secured by screws or bolts at the attachment hole.

By applying a stress reduction plate around the heat shield attachment hole, the stress created at the hole is better distributed over the whole stress reduction plate and this avoids dangerous yield points at the attachment holes. The stress reduction plate is simple and inexpensive to manufacture and to install and by providing the plate as just a single layer thickness, it does not add considerably to the wheel weight and does not cause collisions with other parts during attachment or operation.

## Claims

1. A heat shield assembly complying a plate (5) of heat shield material having an attachment hole (7) therein by means of which the plate can be attached to another part using a fixation means, the assembly further comprising a stress reduction plate (8) secured to the plate (5) of heat shield material at a plurality of securing points (9) spaced from the attachment hole (7).

2. The assembly of claim 1, whereby the stress reduction plate (8) is secured to the plate (5) of heat shield material by welding.

3. The assembly of any preceding claim, whereby the plurality of securing points (9) are at the outer edge of the stress reduction plate (8).

4. The assembly of any preceding claim, having four securing points (9).

5. The assembly of any preceding claim, having nine securing points (9').

6. The assembly of any preceding claim, wherein the plate (5) of heat shield material has two or more attachment holes (7) and a stress reduction plate (8) secured to the plate (5) around each attachment hole (7).

7. The assembly of any preceding claim, comprising a plurality of plates (5) of heat shield material, each having one or more attachment holes (7) and one or more stress reduction plate (8).

8. A wheel to which a heat shield assembly according to any preceding claim is attached.

9. The wheel of claim 8, wherein the heat shield assembly is attached by screws or bolts through the attachment hole(s) (7).

10. The wheel of claim 8 or 9, being an aircraft wheel.

11. A method of forming a heat shield for attachment to a part, the method comprising securing a stress reduction plate, at a plurality of securing points, around an attachment hole in a plate of heat shield material to be attached, via the attachment hole, to a part.

12. The method of claim 11, wherein the securing is by means of welding.

13. The method of claim 11 or 12, further comprising securing the heat shield material to which the stress reduction plate is secured, to the part by means of fixation means.

14. The method of claim 13, whereby the fixation means are screws or bolts.
